(19) Europäisches Patentamt / European Patent Office / Office européen des brevets

(11) **EP 2 056 126 B1**

(12) **FASCICULE DE BREVET EUROPEEN**

(45) Date de publication et mention
de la délivrance du brevet:
**29.06.2011 Bulletin 2011/26**

(51) Int Cl.:
***G01S 17/10*** *(2006.01)*     ***G01S 7/489*** *(2006.01)*
***G01S 17/89*** *(2006.01)*     ***G01S 17/46*** *(2006.01)*

(21) Numéro de dépôt: **08291012.6**

(22) Date de dépôt: **28.10.2008**

(54) **Procédé de détection d'une impulsion lumineuse réfléchie sur un objet pour déterminer la distance de l'objet, capteur et dispositif de mise en oeuvre**

Verfahren zur Erfassung eines Reflexions-Lichtimpulses auf einem Objekt zur Abstandsbestimmung des Objekts, Sensor und Vorrichtung zur Umsetzung dieses Verfahrens

Method of detecting a light pulse reflected on an object to determine the distance of the object, sensor and device for implementing same

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **02.11.2007 FR 0707723**

(43) Date de publication de la demande:
**06.05.2009 Bulletin 2009/19**

(73) Titulaire: **Commissariat à l'Énergie Atomique et aux Énergies Alternatives**
**75015 Paris (FR)**

(72) Inventeurs:
• **Rothman, Johan**
**38250 Lans en Vercors (FR)**
• **De Borniol, Eric**
**38760 St Paul De Varces (FR)**

(74) Mandataire: **Jacquard, Philippe Jean-Luc et al**
**Cabinet ORES**
**36, rue de St Pétersbourg**
**75008 Paris (FR)**

(56) Documents cités:
**US-A- 5 216 259**     **US-A1- 2002 143 506**
**US-A1- 2004 119 541**     **US-B1- 7 016 519**

**EP 2 056 126 B1**

**Description**

La présente invention se rapporte à un procédé de détection d'une impulsion lumineuse réfléchie sur un objet, à un capteur et à un dispositif de mise en oeuvre permettant de déterminer la distance séparant un objet du capteur ou la distance entre deux objets.

Le principe de l'imagerie lumineuse active consiste à émettre une impulsion lumineuse en direction de la scène ou de l'objet que l'on veut observer, à détecter l'impulsion lumineuse après que celle-ci se soit réfléchie sur l'objet, puis à afficher le signal détecté sur une interface d'affichage ou à traiter les donner pour une utilisation ultérieure. La détection se fait à l'aide d'un dispositif de détection comprenant une matrice de capteurs unitaires définissant chacun un pixel de l'image. On peut citer à titre d'exemple les capteurs CCD (charge coupled divice en anglais ou détecteur à couplage de charge) et les capteurs CMOS (complementary metal-oxyde-semiconductor en anglais). Une telle matrice comprend, de nos jours, plusieurs millions de ces capteurs unitaires définissant ainsi des images comprenant plusieurs méga pixels.

On distingue en général deux types d'imagerie à savoir l'imagerie 2D et l'imagerie 3D. L'imagerie 2D est basée sur l'émission d'une impulsion lumineuse qui se réfléchit sur une scène, suivie de sa détection par la matrice de capteurs unitaires qui recueillent chacun une certaine quantité de photons réfléchie par l'objet observé. Chaque capteur transmet alors un signal proportionnel au nombre de photons qu'il a reçus et ce signal est affiché sur chaque pixel de l'image. On obtient ainsi une information sur la réflectivité de l'objet observé par rapport à la scène qui l'entoure. Généralement, la détection de l'impulsion lumineuse réfléchie ne se fait pas immédiatement après l'émission de l'impulsion lumineuse mais commence après un délai $t_d$ déterminé, et s'effectue pendant un intervalle de temps $\delta t$, appelé « temps d'intégration ».

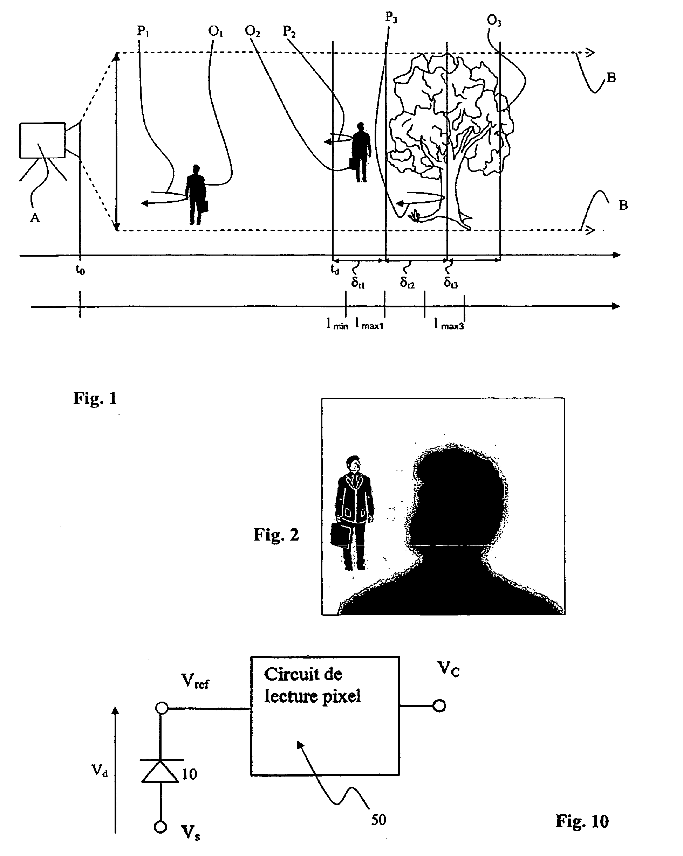

Le délai $t_d$ détermine la distance minimale d'observation $1_{min}$ (car $1_{min} = c * t_d/2$, où c est la vitesse de la lumière) et le temps d'intégration $\delta t$ détermine la distance maximale $1_{max}$ (car $1_{max} = c * (t_d + \delta t)/2$). Plus l'objet est proche du dispositif de détection, plus l'impulsion lumineuse se réfléchit rapidement sur l'objet. Ainsi, en contrôlant le délai $t_d$ et le temps d'intégration $\delta t$, l'utilisateur détermine les objets qu'il peut observer. Ceci est illustré dans la figure 1 dans laquelle un utilisateur (non représenté) dispose d'un dispositif d'imagerie active de l'état de la technique A apte à émettre des impulsions lumineuses dont le trajet est représenté par les traits en pointillés B. L'impulsion lumineuse est émise au temps $t_0$ par le dispositif A vers les objets observés. La phase de détection est retardée d'un délai $t_d$ par rapport au moment de l'émission $t_0$ et dure pendant un intervalle de temps $\delta t$. La partie de l'impulsion lumineuse $P_1$ qui se réfléchit sur l'objet O1 revient donc vers le dispositif A avant que ne débute la phase de détection, c'est-à-dire avant le délai $t_d$. Par conséquent, l'objet O1 n'est pas détecté puisqu'il se situe avant la distance minimale d'observation $l_{min}$.

Entre le temps $t_d$ et le temps $t_d + \delta t_1$, les capteurs unitaires du dispositif de détection emmagasinent les photons de la partie P2 de l'impulsion lumineuse réfléchie par l'objet O2. Au temps $t_d + \delta t_1$ chaque capteur unitaire transmet un signal proportionnel au nombre de photons qu'il a reçu pendant l'intervalle de temps $\delta t_1$. Ce signal est transmis à un circuit de traitement des données puis à une interface d'affichage de l'image. Cette image est illustrée en figure 2 où l'on peut voir que l'objet O1 situé avant la distance minimale d'observation est représenté par une silhouette floue, sans contraste, au contour mal défini, alors que l'objet O2, dont le signal a été capté, est net et contrasté. Enfin, la partie P3 de l'impulsion lumineuse réfléchie par l'objet O3 n'est pas captée car, compte tenu de la distance de l'objet O3, elle arrive après le temps d'intégration $\delta t_1$. L'objet O3 n'apparaît donc pas sur l'image. Il devrait apparaitre normalement en noir (absence de détection de photons), mais pour des raisons de clarté de la figure, il n'a pas été représenté. Le résultat affiché est une image de réflectance qui permet de distinguer les objets entre eux en fonction de leur capacité à renvoyer l'impulsion lumineuse. Si l'oeil humain peut comprendre que l'objet O1 se situe avant l'objet O2, il est impossible de déterminer avec précision de quelle distance les objets O1 et O2 sont séparés.

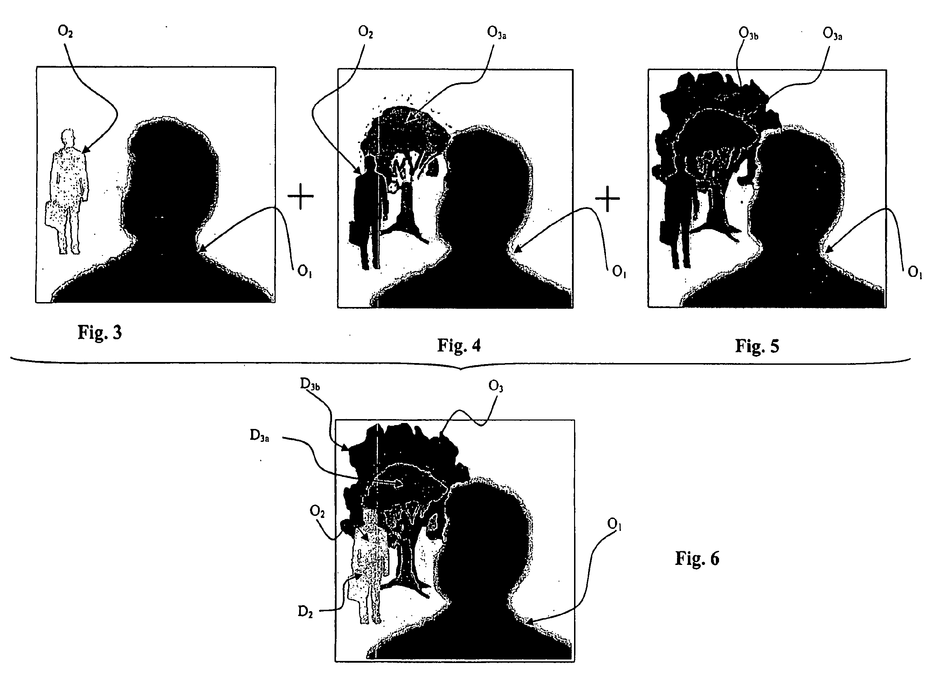

Afin d'accéder à cette information, l'état de la technique propose de diminuer au maximum l'intervalle de détection $\delta t$ et d'émettre un grand nombre d'impulsions lumineuses avec des délais $t_d$ croissants (voir les figures 1, 3, 4 et 5), puis de combiner les informations de chaque image pour « construire » l'information de distance. Ainsi, la figure 3 illustre ce qui est détecté pendant l'intervalle d'intégration $\delta t_1$. L'objet O1 n'est pas détecté (illustré en noir), mais l'objet O2 est détecté. L'image est codée en une image de distance et représente l'information fournie par tous les capteurs unitaires qui ont captés un signal lumineux pendant l'intervalle d'intégration $\delta t_1$. La distance D2 de l'objet O2 est calculée à partir de la vitesse de propagation de la lumière et de l'intervalle d'intégration $\delta t_1$. Tous les objets situés derrière l'objet O2 ne sont pas détectés. Ils apparaissent normalement en noir (absence de détection de photons), mais pour des raisons de clarté de la figure, ils n'ont pas été représentés.

La figure 4 illustre ce qui est détecté pendant l'intervalle d'intégration $\delta t_2$. Les objets O1 et O2 ne sont pas détectés (illustrés en noir), mais une première partie O3a de l'objet O3 est parfaitement détecté. L'image est codée en une image de distance et représente l'information fournie par tous les capteurs unitaires qui ont captés un signal lumineux pendant l'intervalle d'intégration $\delta t_2$. La première partie O3a de l'objet O3 est alors située à la distance D3a. La partie O3b de l'objet O3 située derrière la partie O3a n'est pas détectée mais n'a pas été représentée.

Enfin, la figure 5 illustre ce qui est détecté pendant l'intervalle d'intégration $\delta t_3$. Les objets O1, O2 et O3a ne sont pas détectés (illustrés en noir), mais la deuxième partie O3b de l'objet O3 est détectée. L'image est codée en une

2

image de distance et représente l'information fournie par tous les capteurs unitaires qui ont capté un signal lumineux pendant l'intervalle d'intégration $\delta t_3$. La deuxième partie O3b de l'objet O3 est alors située à la distance D3b.

Puis l'ensemble des données est compilé de manière à réaliser, à partir des images des figure 3, 4 et 5, une image artificielle, illustrée en figure 6, qui représente l'information fournie par les capteurs unitaires qui ont capté un signal lumineux pendant les intervalles d'intégration $\delta t_1$, $\delta t_2$ et $\delta t_3$. Ce procédé est long et complexe car il faut traiter un grand nombre de données. Il est coûteux en énergie car un grand nombre d'impulsions lumineuses est nécessaire (dans l'exemple illustré il faut trois impulsions ; en réalité, leur nombre est très supérieur). D'autre part, la résolution spatiale de la construction 3D à partir de toutes les images 2D est déterminée par la précision temporelle du décalage de délai $t_d$ et de la durée de l'intervalle d'intégration $\delta t$. Enfin, ce procédé est sensible aux déplacements des objets pendant la succession d'impulsions lumineuses, de sorte que l'image artificiellement construite n'est pas toujours précise.

D'autres procédés de l'état de la technique pour la réalisation d'imagerie 3D existent mais pour obtenir une bonne résolution en réflectivité et en profondeur, les deux informations sont traitées simultanément, ce qui requiert des circuits électroniques rapides et complexes qui peuvent limiter la résolution en profondeur et leur résolution latérale en imposant un pas de pixels suffisamment grand pour intégrer tous les composés électroniques de détection dans le pixel.

Il existe également des systèmes d'imagerie active qui utilisent des capteurs à gain réglable en fonction de la distance des objets à observer ou de la puissance des impulsions lumineuses envoyées. Ainsi, lorsque la déperdition d'énergie est importante (grandes distances d'observation et/ou source lumineuse de faible énergie), le gain des capteurs est réglé au plus haut afin d'obtenir une haute sensibilité du capteur. Dans ces dispositifs, le gain est un paramètre de réglage du dispositif au même titre que le délai de détection $t_d$ et la durée de l'intervalle d'intégration $\delta t$. Mais une fois réglé, le gain ne varie pas pendant l'intervalle d'intégration $\delta t$. Un tel système est décrit dans l'article « a low noise, lasergated imaging system for long range target identification » de Ian Baker, Stuart Duncan et Jeremy Copley, paru dans la revue Proceeding of SPIE, volume 5406, pages 133-144, en août 2004. Ce système utilise par ailleurs une succession d'impulsions laser devant être traitées avant affichage.

US 5 216 259 décrit un procédé de détermination de distance. Pour détecter l'instant de retour du signal, on fait varier le gain d'un dispositif amplificateur optique de manière contrôlée.

La présent invention vise à palier les inconvénients de l'état de la technique en proposant un procédé de détection d'une impulsion lumineuse réfléchie ne nécessitant qu'un, voire deux impulsions lumineuses, pour obtenir une information de distance des objets par rapport au dispositif de détection, ce procédé s'appuyant sur un dispositif simple à réaliser, de grande résolution, et rapide car il ne nécessite pas le traitement d'un grand nombre de données.

Plus précisément, l'invention se rapporte à un procédé de détection d'une impulsion lumineuse réfléchie sur un objet, comprenant les étapes définies dans la revendication 1.

Selon d'autres modes de réalisation :

- le procédé peut comprendre, en outre, les étapes préliminaires suivantes :

  a) émettre une impulsion lumineuse d'intensité et de durée connues en direction de l'objet, puis
  b) détecter un signal de réflexion de l'impulsion lumineuse sur l'objet pendant un intervalle d'intégration déterminé, avec au moins un capteur à gain apte à amplifier le signal de réflexion, le gain étant maintenu constant pendant tout l'intervalle d'intégration,

  et comprenant en outre une étape e) de calcul du rapport du signal obtenu à l'étape d) sur le signal obtenu à l'étape b) ;
- le procédé peut comprendre, en outre, les étapes intermédiaires suivantes :

  f) émettre une impulsion lumineuse d'intensité et de durée connues en direction de l'objet, puis
  g) détecter un signal de réflexion de l'impulsion lumineuse sur l'objet pendant un intervalle d'intégration déterminé, avec au moins un capteur à gain apte à amplifier le signal de réflexion, le gain étant maintenu constant pendant tout l'intervalle d'intégration,

  et comprenant en outre une étape h) consistant à calculer le rapport du signal obtenu à l'étape d) sur le signal obtenu à l'étape g) ;
- les étapes b), d) ou g) peuvent commencer après un délai de détection déterminé, le délai de détection pouvant être compris dans l'intervalle 20 nanosecondes à 200 microsecondes ; et
- l'intervalle d'intégration peut être compris dans l'intervalle 10 nanosecondes à 2 microsecondes, de préférence dans l'intervalle 30 nanosecondes à 300 nanosecondes.

Par convention, les étapes du procédé précédent sont faites dans l'ordre alphabétique.

L'invention se rapporte également à un dispositif d'imagerie lumineuse active comprenant un émetteur et un récepteur d'impulsion lumineuse, un moyen de traitement du signal émis par le récepteur après réception, dans lequel le récepteur comprend une matrice de détection munie de capteurs d'un signal lumineux. Ce dispositif d'imagerie est définie dans la revendication 7.

Selon un autre mode de réalisation, la matrice de détection peut présenter une alternance de capteurs précédents, dont le moyen de contrôle du gain d'amplification est apte à faire varier le gain pendant la détection, et de capteurs dont le moyen de contrôle du gain d'amplification est apte à maintenir le gain constant pendant la détection.

Selon d'autres modes de réalisation :

- le capteur peut comprendre au moins deux éléments de stockage, dont l'un est apte à intégrer le signal généré par le détecteur pendant les étapes c) et d), et l'autre est apte à intégrer le signal généré pendant les étapes a) et b) ou f) et g) ;
- le détecteur de photon et/ou le circuit de lecture peut/peuvent présenter un gain d'amplification et le moyen de contrôle du gain d'amplification peut agir sur le détecteur de photon et/ou le circuit de lecture pour faire varier le signal reçu de manière contrôlée pendant une durée déterminée ;
- le circuit de lecture peut être apte à permettre une intégration cyclique du signal émis par le détecteur de photons pendant un intervalle de détection ;
- le circuit de lecture peut comprendre au moins un condensateur relié à un amplificateur à transimpédance ;
- le détecteur de photon peut être une photodiode à avalanche ;
- la photodiode à avalanche peut être prise dans le groupe constitué par les photodiodes en matériau semi-conducteur de type II-VI, les photodiodes en matériau semi-conducteur de type III-V, les photodiodes en Silicium et les photodiodes en Germanium ; et
- la photodiode à avalanche peut être en Cadmium-Mercure-Tellure.

D'autres caractéristiques de l'invention seront énoncées dans la description détaillée ci-après faite en référence aux figures qui représentent, respectivement :

- la figure 1, une vue schématique de la mise en oeuvre d'un procédé d'imagerie active de l'État de la Technique ;
- la figure 2, une représentation schématique d'une image 2D obtenue avec le procédé de l'État de la Technique décrit à la figure 1 ;
- les figures 3 à 6, des représentations schématiques d'un procédé d'imagerie 3D de l'État de la Technique ;
- la figure 7, une vue schématique de la mise en oeuvre d'un procédé de détection d'une impulsion lumineuse réfléchie selon la présente invention ;
- les figures 8a à 8d, des diagrammes illustrant un exemple de variation temporelle du gain du capteur de la figure 10 en fonction de sa tension d'alimentation et le signal transmis par chaque capteur unitaire lors de la mise en oeuvre du procédé de détection selon l'invention ;
- la figure 9, une représentation schématique d'une image 3D obtenue avec le procédé selon l'invention ;
- la figure 10, une vue schématique d'un capteur selon l'invention ;
- les figures 11 et 12, des vues schématiques de deux modes de réalisation de capteurs selon l'invention, adaptés à une variation du gain du détecteur de photon du capteur ;
- les figures 13 et 14, des vues schématiques de schémas de montage, respectivement des modes de réalisation de capteurs de la figure 11 et de la figure 12 ; et
- les figures 15 et 16, des vues schématiques de deux modes de réalisation de capteurs selon l'invention, adaptés à une variation du gain du circuit de lecture du capteur.

Dans la Description ci-après, les termes suivants seront définis comme suit :

Bruit : le bruit définit les signaux aléatoires et non désirés, voire parasites, se superposant aux signaux utiles. On utilise souvent le concept de rapport signal sur bruit (SNR) pour indiquer la qualité d'une mesure ou d'une transmission de données en faisant le rapport entre la valeur du signal et celle du bruit.

Facteur de bruit : capacité d'un composant électronique à générer un bruit parasite. Ce facteur s'obtient en comparant le SNR d'entrée avec le SNR de sortie pour mesurer le niveau du bruit ajouté par l'équipement.

Gain : Le gain en tension, en intensité ou en puissance d'un montage est le rapport entre la valeur d'entrée de ces paramètres et celle en sortie. Il peut être exprimé en décibel (dB). Par exemple, le gain en tension d'un montage en dB se calcule ainsi : $20 \log(Vs/Ve)$, où Vs est la tension de sortie et Ve la tension d'entrée.

Impulsion lumineuse : émission lumineuse d'une énergie donnée pendant une durée déterminée, inférieure, en général, à une nanoseconde ; les impulsions lumineuses peuvent être obtenues à partir de dispositifs laser ou à partir d'autres dispositifs lumineux, tels que des diodes électroluminescentes, l'objectif étant une émission de photons.

Puissance : énergie fournie par unité de temps à un système par un autre système.

Effet d'avalanche : lorsqu'une diode à effet d'avalanche est soumise à une polarisation inverse importante, les électrons et/ou les trous atteignent, au sein de la jonction PN, une énergie très grande qui favorise les interactions entre les porteurs, ce qui permet de générer des paires électron-trou. Le nombre de porteurs augmente et le phénomène se reproduit avec le porteur initial et les porteurs créés lors des interactions, créant ainsi un effet d'amplification important.

Temps de trame : intervalle de temps entre deux prises d'image.

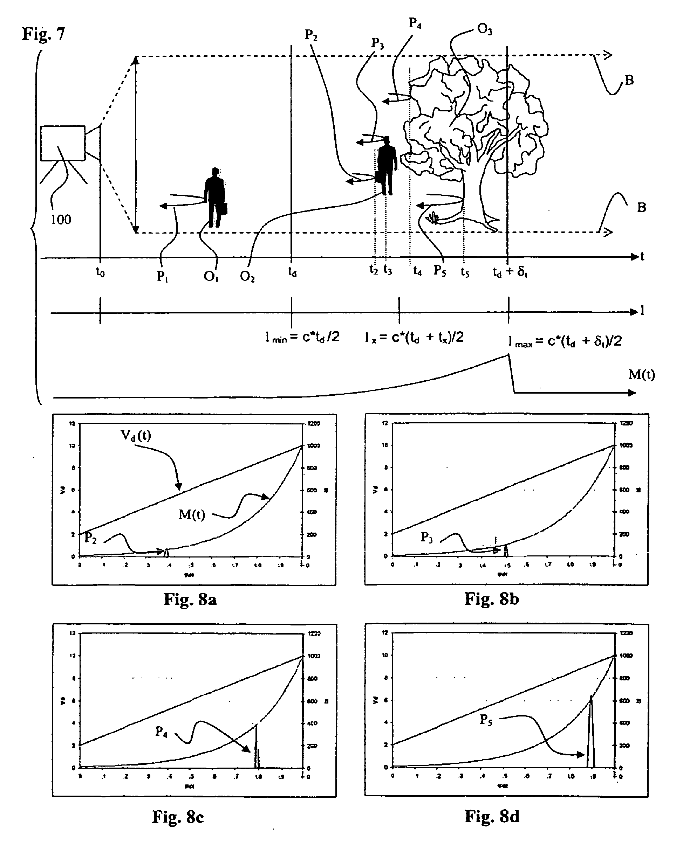

La figure 7 illustre la mise en oeuvre d'un procédé de détection d'une impulsion lumineuse selon la présente invention par un dispositif d'imagerie 100. Ce dispositif 100 comprend un émetteur et un récepteur d'impulsion lumineuse, un moyen de traitement du signal émis par le récepteur après réception de l'impulsion lumineuse réfléchie, et une interface d'affichage du signal traité par le moyen de traitement. Pour des raisons de clarté aucun de ces sous éléments n'a été représenté dans la figure 7.

Le trajet de l'impulsion lumineuse a été représenté, comme dans la figure 1, par les traits en pointillés B. L'émetteur du dispositif 100 émet donc, en direction de la scène à observer, une impulsion lumineuse d'énergie d'intensité et de durée connues qui peuvent, éventuellement, être réglables.

Comme dans l'État de la Technique décrit précédemment, la détection d'un signal de réflexion de l'impulsion lumineuse sur un objet de la scène observée ne commence qu'après un délai $t_d$ déterminé et s'effectue pendant un temps d'intégration $\delta t$.

Pendant le temps d'intégration $\delta t$, une partie P2 des photons de l'impulsion lumineuse se réfléchit sur une première partie de l'objet O2, puis une partie P3 des photons de l'impulsion lumineuse se réfléchit sur une deuxième partie de l'objet O2. Une partie P4 se réfléchit sur une première partie de l'objet O3 et une autre partie P5 se réfléchit sur une deuxième partie de l'objet O3.

Cette représentation est schématique car chaque point des objets renvoie une partie de l'impulsion lumineuse.

Le procédé selon l'invention consiste à faire varier le gain M du récepteur du dispositif 100 pendant l'intervalle d'intégration $\delta t$ (voir la courbe M(t) représentant la variation du gain M en fonction du temps t). Cette variation du gain est faite de manière contrôlée afin de connaître la valeur du gain à chaque instant de l'intervalle d'intégration $\delta t$.

Selon un premier mode de réalisation du procédé de détection selon l'invention, on considère, en première approximation, que le nombre de photons envoyés dans l'impulsion lumineuse est égal au nombre de photons réfléchis sur les objets de la scène observée et détectés par le récepteur du dispositif 100 muni de capteurs.

Autrement dit, on considère que les capteurs qui ont détecté des photons pendant l'intervalle d'intégration $\delta t$ ont capté, chacun, un même nombre de photons. Il est donc possible, grâce au procédé selon l'invention, de connaître le moment précis du retour des photons réfléchis et leur détection par le capteur.

Ainsi, selon l'invention, chaque capteur unitaire du récepteur présente un gain que l'on fait varier de manière contrôlée pendant l'intervalle $\delta t$. Dans l'exemple illustré ci-après, le gain M du capteur varie de façon exponentielle lorsque la tension $V_d$ aux bornes du détecteur de photons (voir la description se rapportant à la figure 10) varie de manière linéaire.

Par conséquent, deux capteurs unitaires différents détectant un même nombre de photons à deux instants différents transmettront des signaux électriques différents. Ceci est illustré dans les figures 8a à 8d qui représentent le signal amplifié par quatre capteurs du récepteur ayant reçu les parties P2, P3, P4 et P5 de l'impulsion lumineuse à des instants différents.

Le nombre de photons reçu par chacun des quatre capteurs étant considéré, en première approximation, comme identique avant l'amplification, et le facteur d'amplification variant en fonction du temps, le signal transmis par chacun des capteurs au système de traitement du signal du récepteur, a une valeur qui dépend de l'instant précis où les photons ont été reçus et détectés par les capteurs. Ainsi, le signal émis par le capteur recevant la partie P2 (figure 8a) est inférieur au signal transmis par le capteur ayant reçu la partie P3 (figure 8b), lui-même inférieur au signal émis par le capteur ayant reçu la partie P4 (figure 8c), lui-même inférieur au signal émis par le capteur ayant reçu la partie P5 (figure 8d).

Ces signaux sont transmis au dispositif de traitement des signaux du récepteur qui peut déterminer la distance du point ayant réfléchi le signal pour chaque capteur unitaire puisqu'il peut déterminer l'instant précis auquel ont été détectés les photons. Cette distance est égale à :

$$l_x = c \cdot (t_d + t_x) / 2,$$

où « x » est égal à 2, 3, 4 ou 5 pour les figures 8a, 8b, 8c, 8d, et « c » est la vitesse de la lumière (approximé, par la suite, à $3.10^{+8}$ m.s$^{-1}$).

Si, par exemple, le délai de détection $t_d$ est fixé à 6 microsecondes ($6.10^{-6}$ s) et l'intervalle d'intégration $\delta t$ est égal à 10 nanosecondes ($10.10^{-9}$ s), alors seuls les objets situés entre neuf cent mètres et neuf cent un mètres cinquante seront détectés ($l_{min}$ = 900 m et $l_{max}$ = 901,5 m). Lorsque le premier capteur émet un signal vers le circuit de traitement des données, la valeur du signal émis par le capteur est comparée à la valeur du signal reçu par le capteur pour déterminer le gain d'amplification du signal. Connaissant la valeur du gain, et connaissant la loi de variation du gain en fonction du temps, on détermine à quel instant précis est revenu le signal.

Le procédé selon l'invention peut être utilisé avec un délai de détection $t_d$ pris dans l'intervalle 20 nanosecondes à 200 microsecondes. Le procédé selon l'invention est également particulièrement adapté à un intervalle d'intégration $\delta t$ pris dans l'intervalle de 10 nanosecondes à 2 microsecondes, de préférence dans l'intervalle de 30 nanosecondes à 300 nanosecondes. Il n'y a pas de préférence pour le choix du délai de détection $t_d$ car cela correspond à la distance à laquelle on souhaite observer : 20 nanosecondes correspond à 3 mètres et 200 microsecondes correspond à 30 kilomètres. Le choix de l'intervalle dépend donc du détecteur et de sa rapidité de réponse. En revanche, l'intervalle d'intégration $\delta t$ correspond à la précision et il peut être souhaitable, par exemple, de travailler avec une résolution de 1,5 mètres (correspondant à un intervalle d'intégration $\delta t$ de 10 nanosecondes), 4,5 mètres (correspondant à un intervalle d'intégration $\delta t$ de 30 nanosecondes), 45 mètres (correspondant à un intervalle d'intégration $\delta t$ de 300 nanosecondes) ou 300 mètres (correspondant à un intervalle d'intégration $\delta t$ de 2 microsecondes).

Sur la figure 8a, on constate que le signal a été reçu par le capteur trois nanosecondes après le délai de détection $t_d$ et le début de l'intervalle d'intégration $\delta t$ qui dure dix nanosecondes. Il en est de même pour la figure 8b où le signal a été reçu cinq nanosecondes après le début de l'intervalle d'intégration $\delta t$, pour la figure 8c où le signal a été reçu huit nanosecondes après le début de l'intervalle d'intégration $\delta t$, et pour la figure 8d où le signal a été reçu neuf nanosecondes après le début de l'intervalle d'intégration $\delta t$.

La distance $I_2$ du point ayant réfléchi le signal P2 est donc de 900,45 m, la distance $I_3$ du point ayant réfléchi le signal P3 est donc de 900,75 m, la distance $I_4$ du point ayant réfléchi le signal P4 est de 901,2 m et la distance $I_5$ du point ayant réfléchi le signal P5 est de 901,35 m.

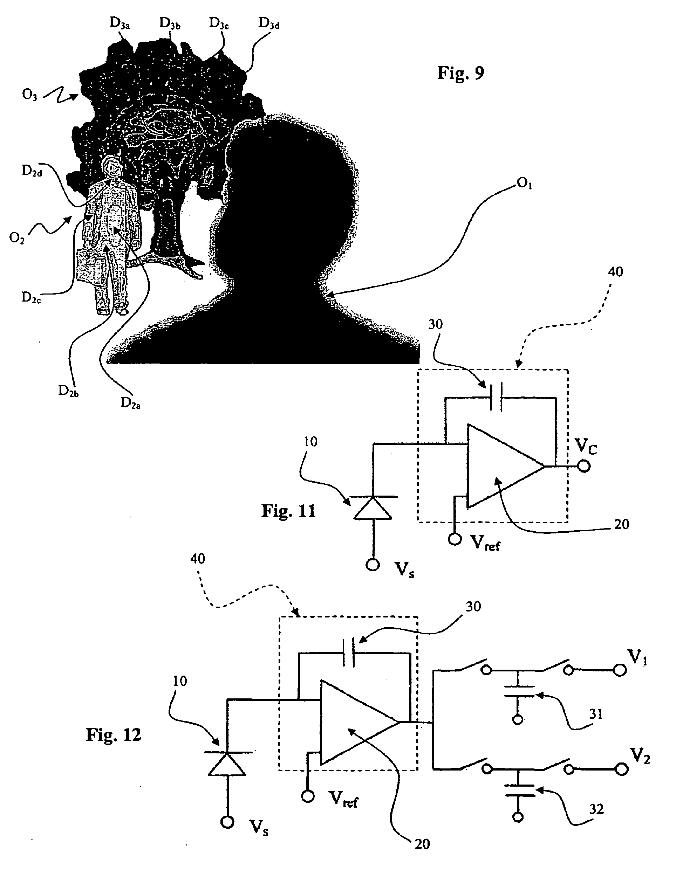

Ces distances ainsi déterminées peuvent être transformées en un signal numérique pouvant être affiché sur une interface d'affichage ou pouvant être mémorisé dans une mémoire, ou pouvant être combiné avec des données issues d'autres types de détecteurs (tels que des émetteurs/détecteurs radar). Ainsi, en une seule impulsion lumineuse, il est possible d'obtenir l'image de distances avec une précision importante. Cette image est illustrée à la figure 9 où seules huit distances $D_{2a}$ à $D_{2d}$ et $D_{3a}$ à $D_{3d}$ ont été représentées. En réalité, l'image obtenue avec le procédé de l'invention est beaucoup plus précise puisque chaque pixel de l'image correspond à la distance mesurée de la partie de la scène observée correspondante.

Un inconvénient de ce procédé réside dans l'approximation selon laquelle le nombre de photons émis dans l'impulsion lumineuse est égal au nombre de photons retournés. Or, dans la réalité, les objets observés, voire les différents points de chaque objet, présentent une capacité à renvoyer les photons différents selon la nature, ou la structure de l'objet. Par exemple, le tronc de l'arbre devrait réfléchir les photons d'une manière différente des feuilles. Le signal P5 devrait donc être différent du signal P4 non seulement en raison de son instant de retour mais également en raison de sa puissance différente due à la différence de réflectivité du tronc et des feuilles.

Selon un mode de réalisation de l'invention, le procédé consiste, préalablement aux étapes décrites précédemment, à émettre une première impulsion lumineuse et à détecter le signal réfléchi en maintenant le gain constant pendant l'intervalle d'intégration $\delta t$. Ce faisant, on obtient une information sur la réflectivité de chacun des objets sans avoir d'informations sur leur distance. Ensuite, une deuxième impulsion lumineuse de même intensité et de même durée que la première est émise puis détectée en faisant varier le gain d'amplification pendant l'intervalle d'intégration. On obtient alors, comme expliqué précédemment, une information sur la distance des objets. Si l'intervalle de temps entre les deux impulsions lumineuses est suffisamment court, on peut considérer que les objets observés n'ont pas bougé et qu'un même point d'un objet réfléchit de la même façon les deux impulsions lumineuses. Le système de traitement du signal peut alors faire le rapport entre le signal obtenu à gain variable et le signal obtenu à gain constant, de manière à s'affranchir du nombre de photons reçus par les capteurs unitaires du récepteur. La qualité de détermination de la distance des objets est donc sensiblement améliorée. La prise de l'image de réflectance peut aussi être faite après la prise de l'image de distance.

A gain constant, le signal de réflectance $N_r$, exprimé en nombre de charges, est calculé comme suit :

$$N_r = M_r \, * \, N_p$$

où $M_r$ est la valeur du gain constant pendant l'intervalle $\delta t$, et $N_p$ est le nombre de photons reçus.

A gain variable, le signal de distance $N_x$ est calculé comme suit :

$$N_x = M \, (t_d + t_x) \, * \, N_p,$$

où $M(t_d + t_x)$ est la valeur du gain variable à l'instant de détection $t_d + t_x$.

Une image représentant l'information de distance corrigée peut alors être obtenue en calculant, pour chaque pixel, c'est-à-dire pour chaque capteur unitaire :

$$N_x / N_r = M(t_d + t_x) / M_r \qquad \text{(relation 1)}$$

Dans l'exemple illustré où le gain M(t) varie de façon exponentielle au cours de l'intervalle $\delta t$, la relation 1 s'écrit :

$$N_x / N_r = \exp(\beta.t_x),$$

où $\beta$ est une constante dépendant de $M_r$ et de la loi de variation du gain variable M(t) en fonction du temps.

Pour mettre en oeuvre le procédé décrit précédemment, l'invention se rapporte également à un capteur unitaire de signal lumineux (figure 10) et à un dispositif d'imagerie active comprenant un récepteur muni d'une matrice de détection comprenant des capteurs unitaires de signal lumineux à gain variable définissant chacun un pixel.

Un capteur unitaire selon l'invention comprend, d'une manière générale, un détecteur de photons 10 apte à générer un signal électrique relatif au nombre de photons détectés, relié à un circuit de lecture 50 permettant d'intégrer le signal généré par le détecteur de photons 10 dans un élément de stockage tel qu'un ou plusieurs condensateurs, un transistor, etc. Le détecteur de photons et/ou le circuit de lecture présente(nt) un gain d'amplification, et un moyen de contrôle du gain d'amplification est agencé dans le capteur pour agir sur le détecteur de photons et/ou le circuit de lecture pour faire varier, de manière contrôlée pendant l'intervalle d'intégration $\delta t$, le signal reçu ou émis par le circuit de lecture. Par exemple, le moyen de contrôle du gain peut faire varier linéairement au cours du temps la tension $V_d$ entre les bornes $V_{ref}$ et $V_s$ du détecteur de photons. Le moyen de contrôle peut être une simple connexion électrique reliant le détecteur de photons et/ou le circuit de lecture de chaque capteur à un composant électronique de contrôle situé hors des capteurs unitaires et hors de la matrice de détection.

Les figures 11 et 12 illustrent des modes de réalisation particuliers d'un capteur selon l'invention adapté pour que la variation du gain pendant le temps d'intégration $\delta t$ se fasse au niveau du détecteur de photons.

Ainsi, le capteur selon la figure 11, présente une photodiode à effet d'avalanche 10, reliée à un amplificateur de transimpédance 20 (CTIA) et à un condensateur comme élément de stockage 30. En faisant varier le potentiel $V_f$, on fait varier le gain de l'APD 10.

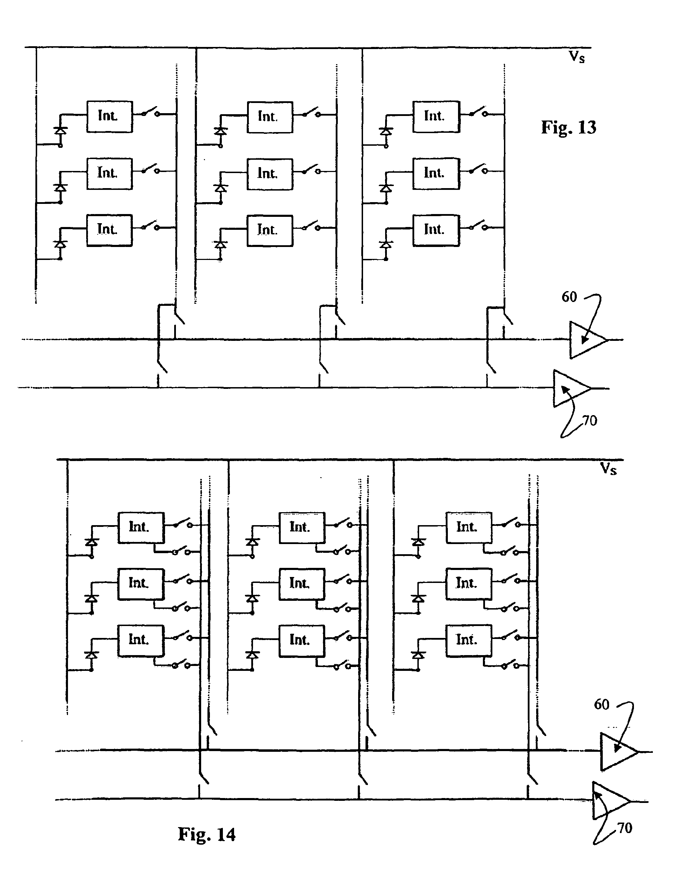

Ce mode de réalisation présente l'avantage d'une construction simple permettant d'avoir un circuit de contrôle du gain de l'APD relié au potentiel $V_f$ délocalisé en dehors de chaque capteur, c'est-à-dire en dehors de chaque pixel. Ceci permet d'augmenter le nombre de pixels pour une même taille de matrice de détection, et donc d'augmenter la résolution du dispositif. La figure 13 illustre ce montage de plusieurs capteurs selon la figure 11 pour réaliser une matrice de détection. Toutes les APD 10 sont reliées au potentiel $V_f$. Le CTIA 20 et l'élément capacitif de stockage 30 sont schématisés par un site d'intégration 40 délimité en pointillés. Le signal généré par l'APD 10 lorsqu'elle reçoit les photons dépend donc de l'instant où les photons sont détectés par l'APD. Le courant ainsi généré est amplifié et stocké dans l'élément capacitif 30 puis envoyé, à la fin de l'intervalle d'intégration $\delta t$, à un moyen de traitement du signal (non représenté) pouvant afficher le signal sur au moins une interface d'affichage 60-70, ou pouvant mémoriser ce signal ou le combiner à d'autres signaux.

Le signal vidéo est mis en forme en dehors de la matrice de détection par un moyen de traitement du signal qui effectue une lecture par rangée de diodes. Lorsque le signal de distance (mode d'intégration à gain variable dans le temps) est corrigé par une information de réflectance (mode d'intégration à gain constant dans le temps), les deux signaux vidéo des deux modes d'intégration peuvent être obtenus sur deux sorties vidéos indépendantes 60 et 70. De préférence, l'information de distance est d'abord corrigée par rapport à l'information de réflectance, puis affichée sur la sortie vidéo à la place de l'information brute (non corrigée) de distance.

Dans un deuxième mode de réalisation de l'invention représenté en figure 12, chaque capteur unitaire contient deux éléments d'intégration 31 et 32. Ainsi, lorsqu'une première impulsion lumineuse est émise puis reçue par la photodiode, un premier signal est généré par l'APD et intégré dans l'élément d'intégration 31. Lorsqu'une deuxième impulsion lumineuse est émise puis reçue par l'APD 10, un deuxième signal est généré puis stocké dans l'élément d'intégration 32. Ainsi, les deux signaux peuvent être intégrés pendant un temps de trame et avec un écart de temps faibles, déterminé par le décalage des deux impulsions lumineuses. Cette réalisation est moins sensible à des mouvements rapides des objets de la scène observée. La réalisation matricielle de ce mode de réalisation est illustrée en figure 14. Avec cette réalisation, il est possible d'effectuer le rapport des deux signaux dans chaque pixel, c'est-à-dire dans chaque capteur unitaire.

L'invention comprend également le mode de mise en oeuvre des réalisations décrites précédemment, où la variation de polarisation de l'APD est pilotée par le potentiel $V_{réf}$.

Un troisième mode de réalisation selon l'invention (non représenté) permet d'obtenir une image en réflectance et une image de distance en une seule impulsion lumineuse. Dans ce mode de réalisation, le mode de fonctionnement en gain constant et en gain variable est alterné entre chaque pixel. Autrement dit, lorsqu'un capteur est relié à un moyen de contrôle du gain d'amplification apte à faire varier le gain pendant la détection, les capteurs qui l'entourent présentent un gain d'amplification constant pendant la détection. L'information de réflectance et de distance peut ainsi être obtenue en cohérence temporelle, par exemple en constituant les deux signaux vidéo à l'intérieur d'un pixel effectif 2*2, qui prend la moyenne de deux pixels à gain constant et de deux pixels à gain variable.

Selon un autre mode de réalisation de l'invention, le gain variable au cours du temps peut être obtenu à l'intérieur du circuit de lecture, par exemple en utilisant un miroir de courant. Le gain de l'APD est alors suffisamment élevé pour que le signal intégré soit moins sensible au bruit du circuit de lecture.

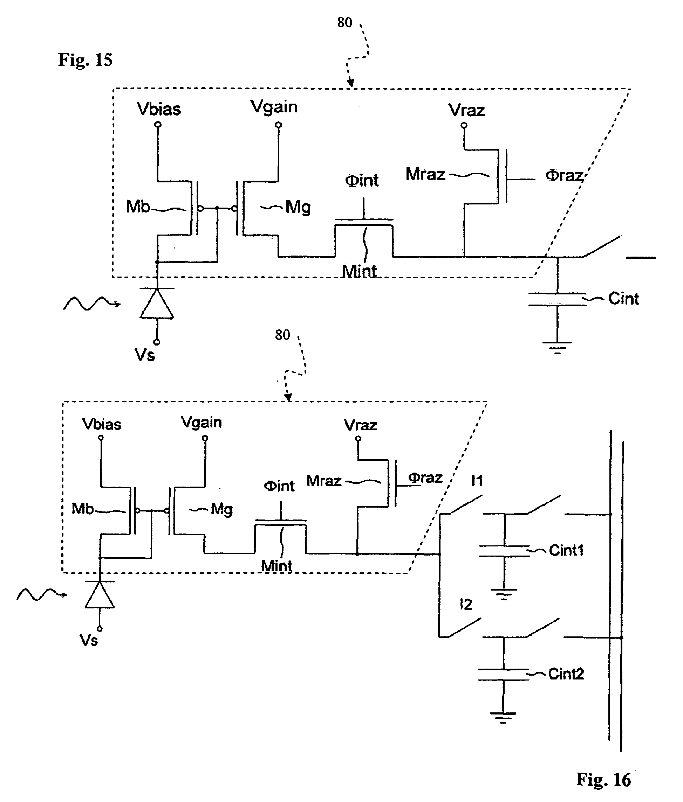

Un exemple de cette réalisation est illustré en figure 15, dans laquelle l'APD 10 est connecté à un miroir de courant 80 dont le gain de courant est contrôlable par la valeur de la différence de potentiel entre le potentiel $V_{bias}$ et le potentiel $V_{gain}$, le potentiel Vf restant constant. Le signal ainsi amplifié pendant un intervalle d'intégration $\delta t_1$ est stocké dans l'élément capacitif de stockage $C_{int}$.

Comme décrit précédemment, chaque détecteur peut également comprendre deux éléments d'intégration $C_{int1}$ et $C_{int2}$, reliés au miroir de courant 80.

En faisant varier la tension $V_{gain}$ au cours du temps, le signal émis par l'APD en réponse à la réception de photons, est amplifié au cours du temps, puis stocké dans l'élément capacitif de stockage $C_{int}$ (figure 15) ou $C_{int1}$ (figure 16). Le signal ainsi stocké donne l'information de distance. Lorsqu'une deuxième impulsion lumineuse est émise, la tension $V_{gain}$ est maintenu constante pendant l'intervalle d'intégration $\delta t_2$. Le signal émis à nouveau par la photodiode à avalanche 10 est alors soit à nouveau stocké dans l'élément capacitif $C_{int}$ lorsque celui-ci a été lu par le moyen de traitement du signal (figure 15), soit stocké dans un deuxième élément capacitif $C_{int2}$ (figure 16). L'affichage se fait alors comme expliqué pour les figures 13 et 14. Selon les applications, l'affichage peut être remplacé par ou combiné à un autre système de transformation de l'information (transformation en signal numérique, mémorisation, etc.).

Ainsi, en contrôlant le gain de chaque détecteur au cours du temps, il est possible d'obtenir en une, voir deux impulsions lumineuses, une information précise de distance et de réflectance d'un objet observé. En répétant cette impulsion, ou ces deux impulsions, un grand nombre de fois par unité de temps, on obtient une image précise en temps réel, que les objets soient immobiles ou non. En outre, l'électronique utilisée est de conception et de mise en oeuvre simple, et permet une résolution accrue car chaque capteur présente une surface réduite. Enfin, la résolution en distance des objets observés est supérieure aux limitations induites par les composants eux-mêmes et, en particulier, en ce qui concerne le paramètre $\delta t$. Pour un $\delta t$ minimum induit par les composants, il est, en effet, possible de déterminer, à l'intérieur de cet intervalle, l'instant précis du retour des photons.

De nombreuses variantes et alternatives peuvent être apportées sans pour cela sortir de l'invention et notamment :

- le circuit de lecture est apte à permettre une intégration cyclique du signal émis par le détecteur de photons pendant un intervalle de détection ($\delta t$) ;
- la photodiode à avalanche est en Cadmium-Mercure-Tellure, et présente un gain pouvant être supérieur à 1000, un facteur de bruit proche de 1 (entre 1 et 1,3), et un temps de réponse de l'ordre de la nanoseconde. D'autres APD peuvent être utilisées telles que celles en matériau semi-conducteur de type II-VI (c'est-à-dire comprenant un ou plusieurs matériau(x) pris dans la deuxième colonne de la classification de Mendeleïev et un ou plusieurs matériau (x) pris dans la sixième colonne de ladite classification), les photodiodes en matériau semi-conducteur de type III-V (c'est-à-dire comprenant un ou plusieurs matériau(x) pris dans la troisième colonne de la classification de Mendeleïev et un ou plusieurs matériau(x) pris dans la cinquième colonne de ladite classification), les photodiodes en Silicium et les photodiodes en Germanium.
- l'affichage peut consister à afficher la distance de chaque point (chaque pixel) par rapport au dispositif de détection (distance absolue des points X de chaque objet par rapport au dispositif de détection : $I_{Xabs} = c*(t_d + t_x)/2$), mais il est également possible d'afficher la distance de chaque pixel X par rapport à un pixel de référence Ref (distance relative des points de chaque objet dans la « fenêtre de détection $\delta t$ : $I_{Xrel} = I_{Xabs} - I_{Ref}$, soit : $I_{Xrel} = c*(t_x - t_{Ref})/2$) ;
- les signaux issus de chaque capteur unitaire peuvent être mémorisés et/ou fusionnés avec des données ou des signaux issus d'autres sources, telles que des détecteurs radar.

**Revendications**

**1.** Procédé de détection d'une impulsion lumineuse réfléchie sur un objet (O1, O2, O3), comprenant les étapes suivantes :

c) émettre une impulsion lumineuse d'intensité et de durée connues en direction de l'objet (O1, O2, O3), puis
d) détecter un signal de réflexion (P1, P2, P3, P4, P5) de l'impulsion lumineuse sur l'objet (O1, O2, O3) pendant un intervalle d'intégration ($\delta t$) déterminé,

**caractérisé en ce que** la détection est réalisée avec une matrice de capteurs à gain aptes à amplifier le signal de réflexion, **en ce que** lors de la détection pendant l'intervalle d'intégration ($\delta t$), on fait varier le gain des capteurs de manière contrôlée afin de connaître le gain à chaque instant de l'intervalle d'intégration ($\delta t$), et **en ce qu'**il comprend, en outre, l'étape suivante :

i) déterminer l'instant précis de retour du signal de réflexion en évaluant le gain d'amplification du signal de réflexion.

2. Procédé selon la revendication 1, comprenant, en outre, les étapes préliminaires suivantes :

a) émettre une impulsion lumineuse d'intensité et de durée connues en direction de l'objet (O1, O2, O3), puis
b) détecter un signal de réflexion (P1, P2, P3, P4, P5) de l'impulsion lumineuse sur l'objet (O1, O2, O3) pendant un intervalle d'intégration ($\delta t$) déterminé, avec au moins un capteur à gain apte à amplifier le signal de réflexion, le gain étant maintenu constant pendant tout l'intervalle d'intégration ($\delta t$),

et comprenant en outre une étape e) de calcul du rapport du signal obtenu à l'étape d) sur le signal obtenu à l'étape b).

3. Procédé selon la revendication 1, comprenant, en outre, les étapes intermédiaires suivantes :

f) émettre une impulsion lumineuse d'intensité et de durée connues en direction de l'objet (O1, O2, O3), puis
g) détecter un signal de réflexion (P1, P2, P3, P4, P5) de l'impulsion lumineuse sur l'objet (O1, O2, O3) pendant un intervalle d'intégration ($\delta t$) déterminé, avec au moins un capteur à gain apte à amplifier le signal de réflexion, le gain étant maintenu constant pendant tout l'intervalle d'intégration ($\delta t$),

et comprenant en outre une étape h) consistant à calculer le rapport du signal obtenu à l'étape d) sur le signal obtenu à l'étape g).

4. Procédé selon l'une quelconque des revendications précédentes, dans lequel les étapes b), d) ou g) commencent après un délai de détection déterminé ($t_d$).

5. Procédé selon la revendication précédente, dans lequel le délai de détection ($t_d$) est compris dans l'intervalle 20 nanosecondes à 200 microsecondes.

6. Procédé selon l'une quelconque des revendications précédentes, dans lequel l'intervalle d'intégration ($\delta t$) est compris dans l'intervalle 10 nanosecondes à 2 microsecondes, de préférence dans l'intervalle 30 nanosecondes à 300 nanosecondes.

7. Dispositif d'imagerie lumineuse active comprenant un émetteur d'impulsion lumineuse d'intensité et de durée connues en direction de l'objet (O1, O2, O3), et un récepteur d'un signal de réflexion (P1, P2, P3, P4, P5) de l'impulsion lumineuse sur l'objet (O1, O2, O3) pendant un intervalle d'intégration ($\delta t$) déterminé, **caractérisé en ce que** le récepteur comprend une matrice de capteurs à gain aptes à amplifier le signal de réflexion, et **en ce que** le dispositif d'imagerie comprend un moyen de contrôle du gain d'amplification apte à faire varier le gain des capteurs de manière contrôlée pendant l'intervalle d'intégration ($\delta t$), et un moyen de traitement du signal pour déterminer l'instant précis de retour du signal de réflexion en évaluant le gain d'amplification du signal de réflexion.

8. Dispositif d'imagerie lumineuse active selon la revendication 7, dans lequel chaque capteur de la matrice comprend un détecteur de photons apte à générer un signal relatif au nombre de photons détectés pendant l'intervalle d'intégration ($\delta t$), ledit détecteur étant relié à un circuit de lecture apte à intégrer le signal généré par le détecteur dans un élément de stockage.

9. Dispositif d'imagerie lumineuse active selon la revendication 8 pour la mise en oeuvre du procédé selon les revendications 1 et 2, ou 1 et 3, dans lequel chaque capteur de la matrice comprend au moins deux éléments de stockage, dont l'un est apte à intégrer le signal généré par le détecteur pendant les étapes c) et d), et l'autre est apte à intégrer le signal généré pendant les étapes a) et b) ou f) et g).

10. Dispositif d'imagerie lumineuse active selon la revendication 8 ou 9, dans lequel le détecteur de photon et/ou le circuit de lecture présente(nt) un gain d'amplification et le moyen de contrôle du gain d'amplification agit sur le détecteur de photon et/ou le circuit de lecture pour faire varier le signal reçu de manière contrôlée pendant une durée déterminée.

11. Dispositif d'imagerie lumineuse active selon l'une quelconque des revendications 8 à 10, dans lequel le circuit de lecture est apte à permettre une intégration cyclique du signal émis par le détecteur de photons pendant un intervalle de détection ($\delta t$).

12. Dispositif d'imagerie lumineuse active selon l'une quelconque des revendications 8 à 11, dans lequel le circuit de lecture comprend au moins un condensateur relié à un amplificateur à transimpédance.

13. Dispositif d'imagerie lumineuse active selon l'une quelconque des revendications 8 à 12, dans lequel le détecteur de photon est une photodiode à avalanche.

14. Dispositif d'imagerie lumineuse active selon la revendication 13, dans lequel la photodiode à avalanche est prise dans le groupe constitué par les photodiodes en matériau semi-conducteur de type II-VI, les photodiodes en matériau semi-conducteur de type III-V, les photodiodes en Silicium et les photodiodes en Germanium.

15. Dispositif d'imagerie lumineuse active selon la revendication 14, dans lequel la photodiode à avalanche est en Cadmium-Mercure-Tellure.

16. Dispositif d'imagerie active selon la revendication précédente, dans lequel la matrice de détection présente une alternance de capteurs selon l'une quelconque des revendications 7 à 15, dont le moyen de contrôle du gain d'amplification est apte à faire varier le gain pendant la détection, et de capteurs dont le moyen de contrôle du gain d'amplification est apte à maintenir le gain constant pendant la détection.

**Claims**

1. Method of detecting a light pulse reflected on an object (O1, O2, O3), comprising the following steps:

   c) emitting a light pulse of known intensity and duration towards the object (O1, O2, O3) and then
   d) detecting a reflection signal (P1, P2, P3, P4, P5) of the light pulse on the object (O1, O2, O3) for a given integration interval ($\delta t$),

   **characterised in that** the detection is carried out using a matrix of gain sensors which are capable of amplifying the reflection signal, **in that**, at the time of the detection during the integration interval ($\delta t$), the gain of the sensors is varied in a controlled manner so that the gain at each instant of the integration interval ($\delta t$) is known, and **in that** it further comprises the following step:

   i) determining the exact instant at which the reflection signal is returned by evaluating the amplification gain of the reflection signal.

2. Method according to claim 1, further comprising the following preliminary steps:

   a) emitting a light pulse of known intensity and duration towards the object (01, O2, O3) and then
   b) detecting a reflection signal (P1, P2, P3, P4, P5) of the light pulse on the object (O1, O2, O3) during a given integration interval ($\delta t$) using at least one gain sensor which is capable of amplifying the reflection signal, the gain being kept constant throughout the integration interval ($\delta t$),

   and further comprising a step e) of calculating the ratio of the signal obtained in step d) to the signal obtained in step b).

3. Method according to claim 1, further comprising the following intermediate steps:

f) emitting a light pulse of known intensity and duration towards the object (O1, O2, O3) and then
g) detecting a reflection signal (P1, P2, P3, P4, P5) of the light pulse on the object (O1, O2, O3) during a given integration interval ($\delta t$) using at least one gain sensor which is capable of amplifying the reflection signal, the gain being kept constant throughout the integration interval ($\delta t$),

and further comprising a step h) which consists in calculating the ratio of the signal obtained in step d) to the signal obtained in step g).

4. Method according to any one of the preceding claims, in which steps b), d) or g) begin after a given detection delay ($t_d$).

5. Method according to the preceding claim, in which the detection delay ($t_d$) is within the range from 20 nanoseconds to 200 microseconds.

6. Method according to any one of the preceding claims, in which the integration interval ($\delta t$) is within the range from 10 nanoseconds to 2 microseconds, preferably within the range from 30 nanoseconds to 300 nanoseconds.

7. Active luminous imaging device comprising a device for emitting a light pulse of known intensity and duration towards an object (O1, O2, O3) and a receiver for a reflection signal (P1, P2, P3, P4, P5) of the light pulse on the object (O1, O2, O3) during a given integration interval ($\delta t$), **characterised in that** the receiver comprises a matrix of gain sensors which are capable of amplifying the reflection signal, and **in that** the imaging device comprises a means of controlling the amplification gain which is capable of varying the gain of the sensors in a controlled manner during the integration interval ($\delta t$), and a means of processing the signal in order to determine exact instant at which the reflection signal is returned by evaluating the amplification gain of the reflection signal.

8. Active luminous imaging device according to claim 7, in which each sensor of the matrix comprises a photon detector which is capable of generating a signal relating to the number of photons detected during the integration interval ($\delta t$), said detector being connected to a reading circuit which is capable of integrating the signal generated by the detector into a storage element.

9. Active luminous imaging device according to claim 8 for carrying out the method according to claims 1 and 2 or 1 and 3, in which each sensor of the matrix comprises at least two storage elements, one of which is capable of integrating the signal generated by the detector during steps c) and d) and the other of which is capable of integrating the signal generated during steps a) and b) or f) and g).

10. Active luminous imaging device according to claim 8 or 9, in which the photon detector and/or the reading circuit has/have an amplification gain, and the means of controlling the amplification gain acts on the photon detector and/or on the reading circuit in order to vary the signal received in a controlled manner for a given period of time.

11. Active luminous imaging device according to any one of claims 8 to 10, in which the reading circuit is capable of permitting cyclic integration of the signal emitted by the photon detector during a detection interval ($\delta t$).

12. Active luminous imaging device according to any one of claims 8 to 11, in which the reading circuit comprises at least one capacitor which is connected to a transimpedance amplifier.

13. Active luminous imaging device according any one of claims 8 to 12, in which the photon detector is an avalanche photodiode.

14. Active luminous imaging device according to claim 13, in which the avalanche photodiode is taken from the group constituted by photodiodes made of a semiconductor material of type II-VI, photodiodes made of a semiconductor material of type III-V, photodiodes made of silicon and photodiodes made of germanium.

15. Active luminous imaging device according to claim 14, in which the avalanche photodiode is made of cadmium-mercury-tellurium.

16. Active imaging device according to the preceding claim, in which the detection matrix has an alternating arrangement of sensors according to any one of claims 7 to 15 of which the means of controlling the amplification gain is capable of varying the gain during the detection, and of sensors of which the means of controlling the amplification gain is capable of keeping the gain constant during the detection.

**Patentansprüche**

1. Verfahren zur Erfassung eines auf einem Objekt (O1, O2, O3) reflektierten Lichtimpulses, das die folgenden Schritte enthält:

   c) Senden eines Lichtimpulses bekannter Stärke und Dauer in Richtung des Objekts (O1, O2, O3), dann
   d) Erfassen eines Signals (P1, P2, P3, P4, P5) der Reflexion des Lichtimpulses auf dem Objekt (O1, O2, O3) während eines bestimmten Integrationsintervalls ($\delta t$),

   **dadurch gekennzeichnet, dass** die Erfassung mit einer Matrix von Sensoren mit Verstärkung durchgeführt wird, die das Reflexionssignal verstärken können, dass bei der Erfassung während des Integrationsintervalls ($\delta t$) die Verstärkung der Sensoren kontrolliert variiert wird, um die Verstärkung in jedem Zeitpunkt des Integrationsintervalls ($\delta t$) zu kennen, und dass es außerdem den folgenden schritt enthält:

   i) Bestimmen des genauen Rückkehrzeitpunkts des Reflexionssignals, indem die Verstärkungszunahme des Reflexionssignals ermittelt wird.

2. Verfahren nach Anspruch 1, das außerdem die folgenden vorbereitenden Schritte enthält:

   a) Senden eines Lichtimpulses bekannter Stärke und Dauer in Richtung des Objekts (O1, O2, O3), dann
   b) Erfassen eines Signals (P1, P2, P3, P4, P5) der Reflexion des Lichtimpulses auf dem Objekt (O1, O2, O3) während eines bestimmten Integrationsintervalls ($\delta t$) mit mindestens einem Sensor mit Verstärkung, der das Reflexionssignal verstärken kann, wobei die Verstärkung während des ganzen Integrationsintervalls ($\delta t$) konstant gehalten wird,

   und das außerdem einen Schritt e) des Berechnens des Verhältnisses des im Schritt d) erhaltenen Signals zu dem im Schritt b) erhaltenen Signal enthält.

3. Verfahren nach Anspruch 1, das außerdem die folgenden Zwischenschritte enthält:

   f) Senden eines Lichtimpulses bekannter Stärke und Dauer in Richtung des Objekts (O1, O2, O3), dann
   g) Erfassen eines Signals (P1, P2, P3, P4, P5) der Reflexion des Lichtimpulses auf dem Objekt (O1, O2, O3) während eines bestimmten Integrationsintervalls ($\delta t$) mit mindestens einem Sensor mit Verstärkung, der das Reflexionssignal verstärken kann, wobei die Verstärkung während des ganzen Integrationsintervalls ($\delta t$) konstant gehalten wird,

   und das außerdem einen Schritt h) enthält, der darin besteht, das Verhältnis des im Schritt d) erhaltenen Signals zu dem im Schritt g) erhaltenen Signal zu berechnen.

4. Verfahren nach einem der vorhergehenden Ansprüche, bei dem die Schritte b), d) oder g) nach einer bestimmten Erfassungsverzögerung ($t_d$) beginnen.

5. Verfahren nach dem vorhergehenden Anspruch, bei dem die Erfassungsverzögerung ($t_d$) in dem Intervall von 20 Nanosekunden bis 200 Mikrosekunden liegt.

6. Verfahren nach einem der vorhergehenden Ansprüche, bei dem das Integrationsintervall ($\delta t$) in dem Intervall von 10 Nanosekunden bis 2 Mikrosekunden, vorzugsweise im Intervall von 30 Nanosekunden bis 300 Nanosekunden liegt.

7. Aktive Lichtbildgebungsvorrichtung, die einen Sender eines Lichtimpulses bekannter Stärke und Dauer in Richtung des Objekts (O1, O2, O3) und einen Empfänger eines Signals (P1, P2, P3, P4, P5) der Reflexikon des Lichtimpulses auf dem Objekt (O1, O2, O3) während eines bestimmten Integrationsintervalls ($\delta t$) enthält, **dadurch gekennzeichnet, dass** der Empfänger eine Matrix von Sensoren mit Verstärkung enthält, die das Reflexionssignal verstärken können, und dass die Bildgebungsvorrichtung eine Einrichtung zur Kontrolle der Verstärkungszunahme, die die Verstärkung der Sensoren während des Integrationsintervalls ($\delta t$) kontrolliert variieren kann, und eine Einrichtung zur Verarbeitung des Signals enthält, um den genauen Zeitpunkt der Rückkehr des Reflexionssignals zu bestimmen, indem die Verstärkungszunahme des Reflexionssignals ermittelt wird.

**8.** Aktive Lichtbildgebungsvorrichtung nach Anspruch 7, bei der jeder Sensor der Matrix einen Photonendetektor enthält, der ein Signal bezüglich der Anzahl von während des Integrationsintervalls ($\delta t$) erfassten Photonen erzeugen kann, wobei der Detektor mit einer Leseschaltung verbunden ist, die das vom Detektor erzeugte Signal in ein Speicherelement integrieren kann.

**9.** Aktive Lichtbildgebungsvorrichtung nach Anspruch 8 zur Durchführung des Verfahrens nach den Ansprüchen 1 und 2 oder 1 und 3, bei der jeder Sensor der Matrix mindestens zwei Speicherelemente enthält, von denen eins das vom Detektor während der Schritte c) und d) erzeugte Signal integrieren kann und das andere das während der Schritte a) und b) oder f) und g) erzeugte Signal integrieren kann.

**10.** Aktive Lichtbildgebungsvorrichtung nach Anspruch 8 oder 9, bei der der Photonendetektor und/oder die Leseschaltung eine Verstärkungszunahme aufweisen, und die Kontrolleinrichtung der Verstärkungszunahme auf den Photonendetektor und/oder die Leseschaltung einwirkt, um das empfangene Signal während einer bestimmten Dauer kontrolliert variieren zu lassen.

**11.** Aktive Lichtbildgebungsvorrichtung nach einem der Ansprüche 8 bis 10, bei der die Leseschaltung eine zyklische Integration des vom Photonendetektor während eines Erfassungsintervalls ($\delta t$) gesendeten Signals erlauben kann.

**12.** Aktive Lichtbildgebungsvorrichtung nach einem der Ansprüche 8 bis 11, bei der die Leseschaltung mindestens einen Kondensator enthält, der mit einem Übertragungsimpedanz-Verstärker verbunden ist.

**13.** Aktive Lichtbildgebungsvorrichtung nach einem der Ansprüche 8 bis 12, bei der der Photonendetektor eine Lawinenfotodiode ist.

**14.** Aktive Lichtbildgebungsvorrichtung nach Anspruch 13, bei der die Lawinenfotodiode aus der Gruppe genommen wird, die aus den Fotodioden aus Halbleitermaterial des Typs II-VI, den Fotodioden aus Halbleitermaterial des Typs III-V, den Fotodioden aus Silicium und den Fotodioden aus Germanium besteht.

**15.** Aktive Lichtbildgebungsvorrichtung nach Anspruch 14, bei der die Lawinenfotodiode aus Cadmium-Merkur-Tellur ist.

**16.** Aktive Bildgebungsvorrichtung nach dem vorhergehenden Anspruch, bei der die Erfassungsmatrix eine abwechselnde Anordnung von Sensoren nach einem der Ansprüche 7 bis 15, deren Einrichtung zur Kontrolle der Verstärkungszunahme die Verstärkung während der Erfassung variieren lassen kann, und von Sensoren aufweist, deren Einrichtung zur Kontrolle der Verstärkungszunahme die Verstärkung während der Erfassung konstant halten kann.

**Fig. 1**

**Fig. 2**

**Fig. 10**

Fig. 3

Fig. 4

Fig. 5

Fig. 6

Fig. 7

$l_{min} = c^*t_d/2$    $l_x = c^*(t_d + t_x)/2$    $l_{max} = c^*(t_d + \delta_t)/2$

Fig. 8a

Fig. 8b

Fig. 8c

Fig. 8d

16

EP 2 056 126 B1

Fig. 9

D₃ₐ D₃ᵦ D₃ᵥ D₃ᵩ

O₃

D₂ᵩ

O₂

D₂ᵥ

D₂ᵦ D₂ₐ

O₁

Fig. 11

40
30
Vc
10
20
Vref
Vs

Fig. 12

40
30
10
V₁
31
Vref
V₂
32
Vs
20

17

EP 2 056 126 B1

Fig. 13

Fig. 14

18

**Fig. 15**

**Fig. 16**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5216259 A

**Littérature non-brevet citée dans la description**

- **LAN BAKER ; STUART DUNCAN ; JEREMY CO-PLEY.** a low noise, laser-gated imaging system for long range target identification. *Proceeding of SPIE,* Août 2004, vol. 5406, 133-144